# EUROPEAN PATENT APPLICATION

(11) **EP 3 584 169 A1**
(43) Date of publication of application: **25.12.2019**
(21) Application number: 19168884.5
(22) Date of filing: 12.04.2019
(51) Int. Cl.: B64D 43/00

(54) **ADJUSTABLE COCKPIT USER INTERFACE TO SUPPORT SINGLE PILOT OR REDUCED PILOT OPERATIONS**

(30) Priority: 12.06.2018 US 201816006332
(71) Applicant: Sikorsky Aircraft Corporation, Stratford, CT 06615 (US)
(72) Inventor: LAMPAZZI, Margaret M., Oxford, Connecticut 06478 (US); CHEREPINSKY, Igor, Sandy Hook, Connecticut 06482 (US)
(74) Representative: Schmitt-Nilson Schraud Waibel Wohlfrom Patentanwälte Partnerschaft mbB

(57) **Abstract**

According to an aspect, an apparatus is provided. A computing system (302) is provided. An adaptable user interface (250) is configured to be fixable to an aircraft (110), and the adaptable user interface is coupled to the computing system to replicate at least a portion of controls (204A, 204B) of the aircraft. The adaptable user interface is configured with adjustable positional arrangements. The adjustable positional arrangements include a first position associated with replicating a first functionality of the aircraft controls and a second position associated with replicating a second functionality of the aircraft controls.

## Description

This invention was made with government support under HR0011-17-9-0004 awarded by the Defense Advanced Research Procurement Agency (DARPA). The government has certain rights in the invention.

The subject matter disclosed herein generally relates to user interfaces for vehicles, and more particularly to an adjustable cockpit user interface to support single pilot or reduced pilot operations in vehicles.

A side-by-side cockpit arrangement is designed to support dual pilot operations, which requires two pilots in the cockpit. However, with increasing technology in autonomous operations and when an autonomy "kit" is installed, the minimum crewmembers required to operate the aircraft can be reduced/adjusted based on the redistribution of workload that the autonomous kit affords. Thus, what once required a two-person crew now only requires one. However, given that the cockpit arrangement was designed with two pilots in mind, and all the cockpit displays, controls and switches are fixed in position, the one remaining crewmember cannot reach and access all of the cockpit controls from either seat. This prevents single pilot (reduced crew) operations.

According to an aspect of the invention, an apparatus is provided. The apparatus comprises a computing system and an adaptable user interface configured to be fixable to an aircraft. The adaptable user interface is coupled to the computing system to replicate at least a portion of controls of the aircraft, and the adaptable user interface is configured with adjustable positional arrangements. The adjustable positional arrangements include a first position associated with replicating a first functionality of the aircraft controls and a second position associated with replicating a second functionality of the aircraft controls.

In addition to one or more of the features described above or below, or as an alternative, further embodiments could include the adjustable positional arrangements further comprise a center position associated with replicating the first functionality and the second functionality of the controls.

In addition to one or more of the features described above or below, or as an alternative, further embodiments could include the first position is associated with a first predefined direction.

In addition to one or more of the features described above or below, or as an alternative, further embodiments could include the second position is associated with a second predefined direction different from the first predefined direction.

In addition to one or more of the features described above or below, or as an alternative, further embodiments could include the adaptable user interface is configured to display the first functionality of the controls in response to being moved to the first position.

In addition to one or more of the features described above or below, or as an alternative, further embodiments could include the adaptable user interface is configured to display the second functionality of the controls in response to being moved to the second position.

In addition to one or more of the features described above or below, or as an alternative, further embodiments could include the adaptable user interface is configured to be moveable to one of the adjustable positional arrangements in response to tracked eye movement being associated with the one of the adjustable positional arrangements.

In addition to one or more of the features described above or below, or as an alternative, further embodiments could include a motor is attached to the adaptable user interface, the motor being operable to automatically move the adaptable user interface to the first position, the second position, or a center position. The motor is operable to automatically move the adaptable user interface according to tracked eye movement.

According to further aspects of the invention, a method of providing an assembly for an aircraft is provided. The method includes providing a computing system and coupling an adaptable user interface to the computing system to replicate at least a portion of controls of the aircraft, the adaptable user interface being configured to be fixable to the aircraft. The adaptable user interface is configured with adjustable positional arrangements. The adjustable positional arrangements comprise a first position associated with replicating a first functionality of the aircraft controls and a second position associated with replicating a second functionality of the aircraft controls.

According to further aspects of the invention, an optionally-piloted vehicle system for an aircraft is provided. The optionally-piloted vehicle system includes an autonomous system, and a processing system coupled to the autonomous system. The processing system comprises a processor and memory having instructions stored thereon that, when executed by the processor, cause the autonomous system to: cause an adaptable user interface to display aircraft controls of the aircraft according to a selected one of adjustable positional arrangements, the adaptable user interface being moveable to the adjustable positional arrangements; and control movement of the adaptable user interface to the selected one of the adjustable positional arrangements.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a perspective view of a vehicle according to an embodiment;
FIG. 2A illustrates a schematic of a cockpit of the vehicle according to an embodiment;
FIG. 2B illustrates a schematic of the cockpit of the vehicle according to an embodiment;
FIG. 2C illustrates a schematic of the cockpit of the vehicle according to an embodiment;
FIG. 3 illustrates a schematic block diagram of a computing system replicating the controls on an adaptable/adjustable user interface according to an embodiment;
FIG. 4 illustrates a schematic block diagram of a computer system context-based autonomous perception onboard the vehicle according to an embodiment;

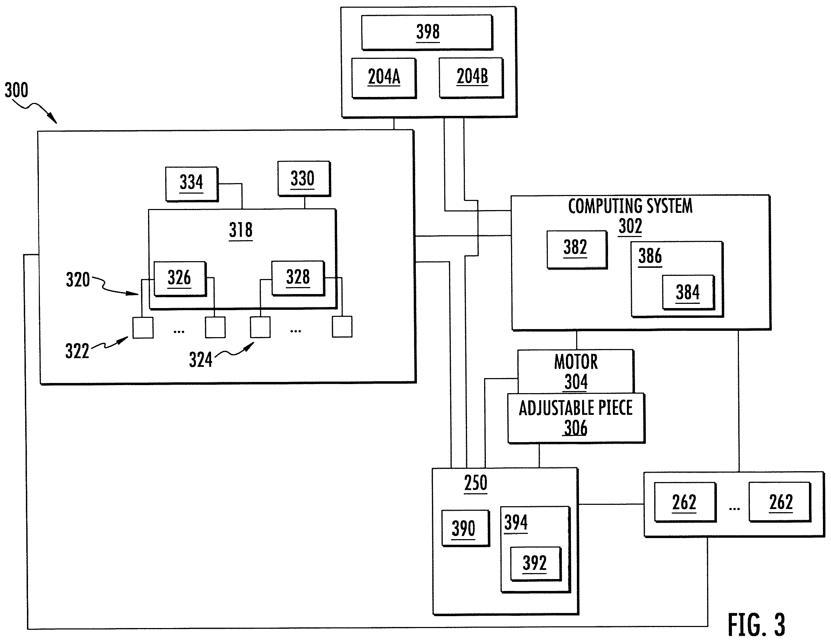

FIG. 3 illustrates an example data structure for context-based indexing; and

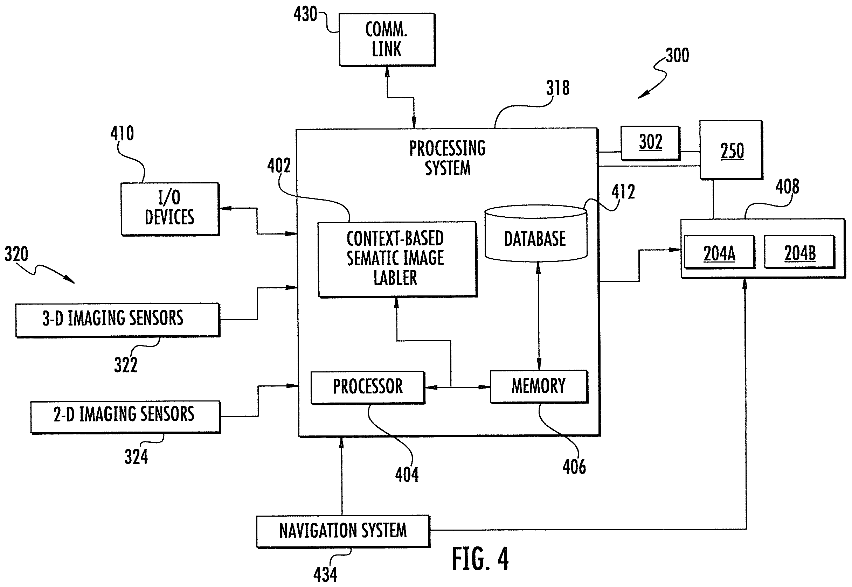

FIG. 4 illustrates a dataflow diagram for context-based autonomous perception according to an embodiment of the invention;

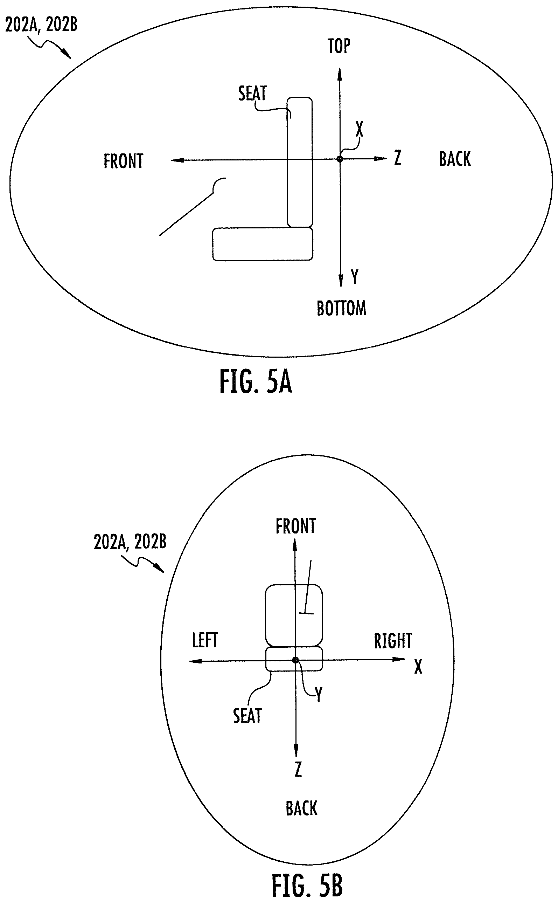

FIG. 5A illustrates a simplified diagram representing an example first pilot space or second pilot space in the cockpit according to an embodiment;
FIG. 5B illustrates a simplified diagram representing the first pilot space or second pilot space in the cockpit according to an embodiment; and

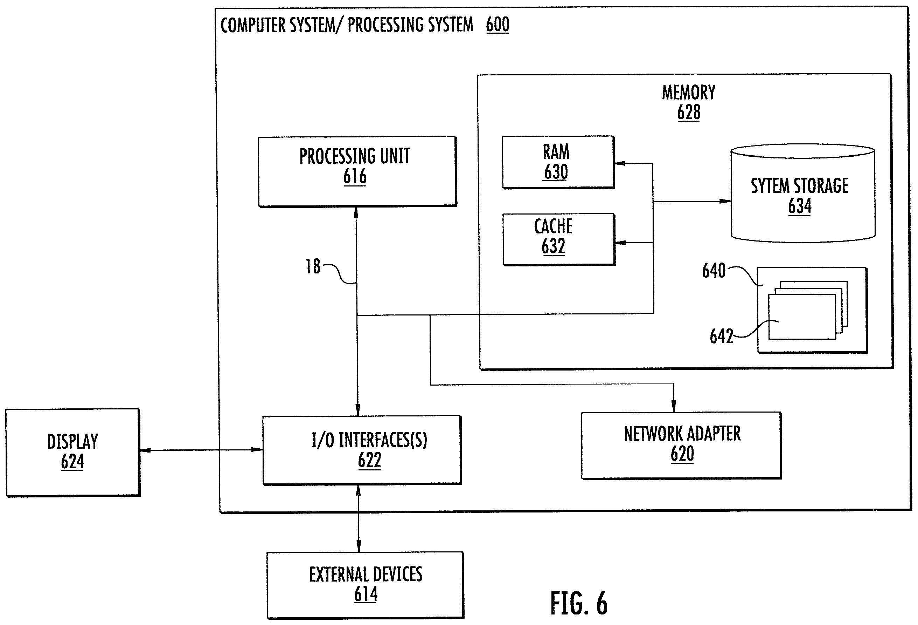

FIG. 6 illustrates a schematic of an example computing system/processing system which can be utilized to implement any features according to an embodiment.

### DETAILED DESCRIPTION OF THE INVENTION

A traditional cockpit is built from the ground up around the number of pilots that will fly the aircraft, typically two pilots in many helicopters. The cockpit arrangement is fixed in place which includes the panels and displays. When an autonomous kit is installed thereby reducing the number of crewmembers (i.e., pilots) in the cockpit, the traditional arrangement no longer serves its purpose because the traditional cockpit arrangement is "fixed" and cannot adjust its elements to the reduced number of crewmembers or a change in seating position. The traditional cockpit is not adaptable without major modifications. Thus, the cockpit would have to be redesigned to support single pilot operations because standard operating procedures (SOP) have certain regulations that a cockpit supports for example, that a 5 foot 2 inch and 6 foot stature person needs to reach all displays and controls. Autonomy affords single pilot operations but also results in a goal of making the aircraft single pilot operable without major cockpit redesign.

Embodiments allow for an adjustable user interface (display) that can be angled and positioned for optimum reach and accessibility from either pilot seat, thereby addressing vision and reach/accessibility issues. Particularly, this allows for an optionally piloted interface with cockpit perception to automatically swivel the display or adjust its interface to optimize the accessibility and viewability. Additionally, this design would allow the cockpit to be optimized for single or dual pilot crews. With a dual pilot crew, for example, the display could be pushed back into the instrument panel for optimum viewing and reach for either pilot.

Particularly, embodiments provide an adaptable user interface to support single pilot operations. For example, through a perception system and a human machine interface (HMI), embodiments are able to adapt the human machine interface to the pilot thereby bringing the information to him/her and tailoring the information as needed for operations. Embodiments disclose installing and positioning a touch-based display as part of an autonomy "kit" that replicates and/or extends existing cockpit functionality across the cockpit. The adaptable user interface, for example, as the touch-based display screen, is configured to replicate physical switches and panels on a single interface. For example, the adaptable user interface can replicate physical switches (normally accessible by a second pilot) which a single pilot cannot physically reach in the existing cockpit setup by using the touch-based interface that is accessible to the single pilot.

Additionally, the adaptable user interface is configured to expose (i.e., display) a mission tasking interface on the display, for example, to plan, monitor, and/or control missions from either seat in the cockpit. The touch-based interface can change its interface to adapt to the mission scenario, for example, by exposing different information content/buttons, or different mission tasks on the display screen. As an example, if the mission scenario is for a Medevac, the displayed content on the touch-based interface will be a tasking interface appropriate to that Medevac mission. Further, if the aircraft is in the landing phase of flight, the adaptable user interface is adapted so that there is an array of buttons/information content uniquely tailored to information needs and actions of the landing phase of flight. The adaptable interface (automatically) responds to its environment and mission needs in order to tailor the human machine interface to the number, type, and/or skillset of the crewmembers.

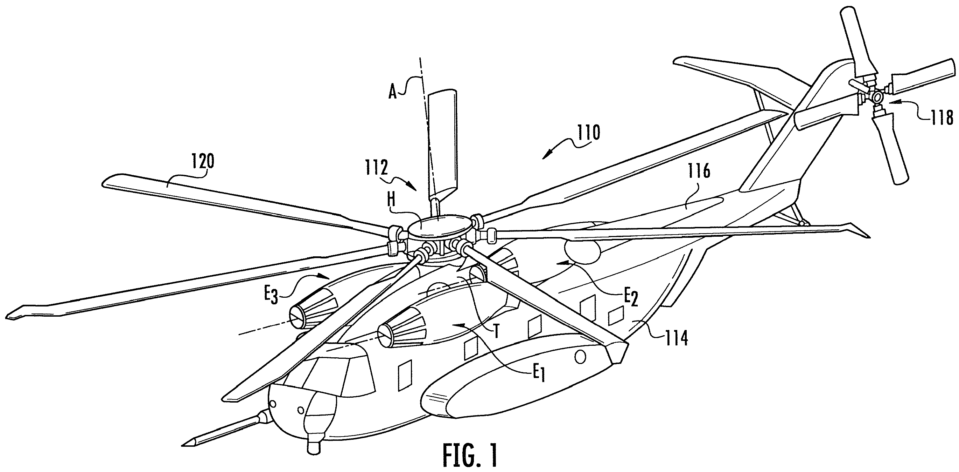

Referring now to the drawings, FIG. 1 illustrates a perspective view of a vehicle 110, such as a rotary wing aircraft having a main rotor assembly 112 according to an embodiment. The vehicle 110 includes an airframe 114 having an extended tail 116 which mounts a tail rotor system 118, such as an anti-torque system, a translational thrust system, a pusher propeller, a rotor propulsion system, and the like. The main rotor assembly 112 includes a plurality of rotor blade assemblies 120 mounted to a rotor hub H. The main rotor assembly 112 is driven about an axis of rotation A through a main gearbox (illustrated schematically at T) by one or more engines E, such as, by example only, E1, E2, and E3. Although a particular helicopter configuration is illustrated and described in an embodiment as the vehicle 110, other vehicles, configurations, equipment, and/or machines, such as high speed compound rotary wing aircraft with supplemental translational thrust systems, dual contra-rotating, coaxial rotor system aircraft, tilt-rotors and tilt-wing aircraft, and fixed wing aircraft, as well as land and other legacy equipment and vehicles having legacy analog HMI components, will also benefit from embodiments of the invention.

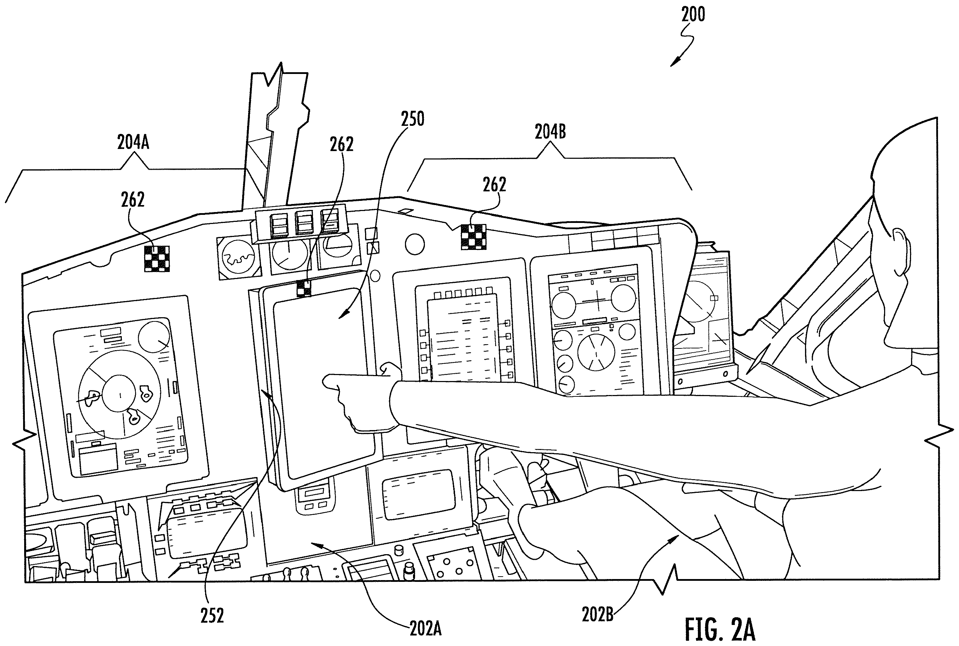

FIG. 2A illustrates a schematic of a cockpit 200 of the vehicle 110 according to an embodiment. The example cockpit 200 has a first pilot space 202A and a second pilot space 202B in the vehicle 110. The first pilot space 202A accommodates a first pilot (or crewmember) seated in the first pilot space 202A, and the second pilot space 202B accommodates a second pilot (or crewmember) seated in the second pilot space 202B. The first and second pilot spaces 202A and 202B each represent a predefined space in the vehicle 110. FIG. 5A illustrates a schematic of a simplified diagram representing the first pilot space 202A or second pilot space 202B in the cockpit 200 according to an embodiment. FIG. 5B illustrates a schematic of a simplified diagram representing the first pilot space 202A or second pilot space 202B in the cockpit 200 according to an embodiment. FIG. 5A represents a side view while FIG. 5B represents a top view. In FIGS. 5A and 5B, an individual pilot space has predefined dimensions in the x-axis, y-axis, and z-axis as understood by one skilled in the art. These predefined dimensions are utilized in the cockpit 200 such that a seated pilot can reach the controls necessary to operate the vehicle 110, thereby defining a predefined pilot space for a pilot. The exemplary predefined space is representative of a single pilot space, such as the first pilot space 202A for a first seated pilot or the second pilot space 202B for a second seated pilot. The example predefined pilot space is simplified with details omitted as understood by one skilled in the art. The example predefined pilot space is provided for explanation purposes and not limitation. It is understood that embodiments are designed to utilize other predefined pilot spaces. Although two pilot spaces are depicted for explanation purposes, embodiments are not meant to be limited to two pilot spaces. It should be appreciated that there can be more than two pilot spaces.

A cockpit 200 having two pilot spaces 202A and 202B typically requires two pilots to fly the vehicle 110 in the state-of-the-art. The first pilot space 202A has (aircraft) controls 204A accessible to the first seated pilot, and the second pilot space 202B has (aircraft) controls 204B accessible to the second seated pilot. The controls 204A and 204B may have some duplicate functionality, while some of the functionality is not duplicative across the controls 204A and 204B. This means that some of the controls 204A are unique to the first pilot space 202A such that (only) the first seated pilot in the first pilot space 202A can physically access and/or reach the controls 204A, while the second seated pilot in the second pilot space 202B cannot access these controls 204A. Analogously, some of the controls 204B are unique to the second pilot space 202B such that (only) the second seated pilot in the second pilot space 202B can physically access and/or reach the controls 204B, while the first seated pilot in the first pilot space 202A cannot access these controls 204B. In some cockpits, there may be an area of overlap in which the first seated pilot in the first pilot space 202A can access and/or reach a few controls in the first pilot space 202A, and vice versa.

The controls 204A and/or 204B can be physical and/or digital HMI components configured to control controlled devices 398 (depicted in FIG. 3). The cockpit 200 contains components, such as, but not limited to, components of controlled devices 398 for controlling actuating control surfaces, lift-increasing flaps and the like. Also, the controls 204A and/or 204B can be components for actuating the landing gear, the engines, the air-brakes, switches, needles, gauges, etc., along with and any other instruments necessary for operating, piloting, and/or driving the vehicle 110. The components of controls 204A and/or 204B may include, but are not limited to, a collective lever, cyclic stick, directional control pedals, as well as a throttle, switch, handle, wheel, lever, dial, pedal, and any other operator engageable component.

Embodiments provide an adaptable/adjustable user interface 250 in a mutually accessible location for both the first seated pilot in the first pilot space 202A and the second seated pilot in the second pilot space 202B. Accordingly, the adaptable/adjustable user interface 250 is located in the center of the cockpit 200 where, for example, the first pilot space 202A and second pilot space 202B overlap. As discussed herein, the adaptable/adjustable user interface 250 can be a touch-based interface, for example, a touch screen, installed and positioned in the instrument panel of the cockpit 200. In some implementations, the adaptable/adjustable user interface 250 is designed to fit in a space or pocket 252 in the cockpit 200. In some implementations, there may not be a pocket 252, and the adaptable/adjustable user interface 250 is designed to fit up against the instrument panel. The adaptable/adjustable user interface 250 is multi-positional, which means that the adaptable/adjustable user interface 250 is able to be positioned for optimum reach, accessibility, and vision from either cockpit seat (i.e., for the first seated pilot in the first pilot space 202A and the second seated pilot in the second pilot space 202B). FIG. 2A illustrates the adaptable/adjustable user interface 250 positioned and optimized toward a second pilot seated in the second pilot space 202B, such that inaccessible controls 204A (functionality) in the first pilot space 202A are replicated (i.e., displayed) with functionality that allows the inaccessible controls 204A to be controllable and accessible by the second pilot in the second pilot space 202B. As such, the second pilot in the second pilot space 202B can view and select buttons on the adaptable/adjustable user interface 250 to control one or more controls 204A normally controlled by the first pilot in the first pilot space 202A, because the adaptable/adjustable user interface 250 is angled for right seat pilot operations. The controls 204A and 204B are HMI components which can be replicated on the adaptable/adjustable user interface 250 for operation by an operator, such as the first pilot and/or the second pilot.

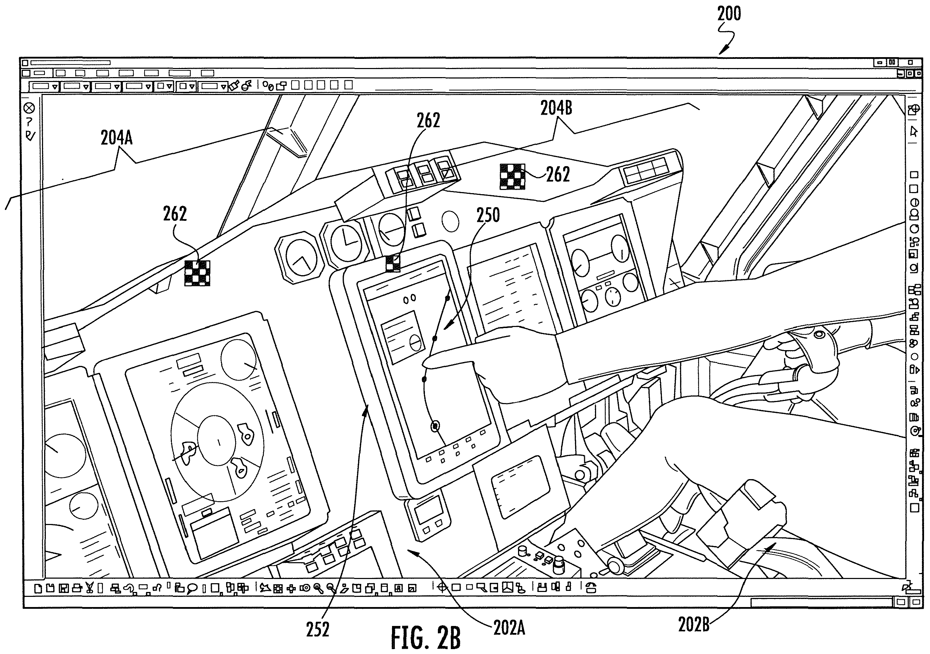

FIG. 2B illustrates a schematic of the cockpit 200 of the vehicle 110 with the adaptable/adjustable user interface 250 positioned and optimized for dual pilot operations according to an embodiment. In FIG. 2B, both the first pilot in the first pilot space 202A and the second pilot in the second pilot space 202B can equally or almost equally operate the adaptable/adjustable user interface 250 because the adaptable/adjustable user interface 250 is in a neutral position. In the center display placement optimized for dual pilot operations, the adaptable/adjustable user interface 250 is configured to display information content that is of equally high interest to both pilots such as terrain map data to support Situation Awareness or Aircrew Alerts. Moreover, with the display in the center position, it is assumed to be the default position and that two pilots are in the cockpit, and the display is flat with the instrument panel to be optimized for reach and vision (as best as possible) for both pilots.

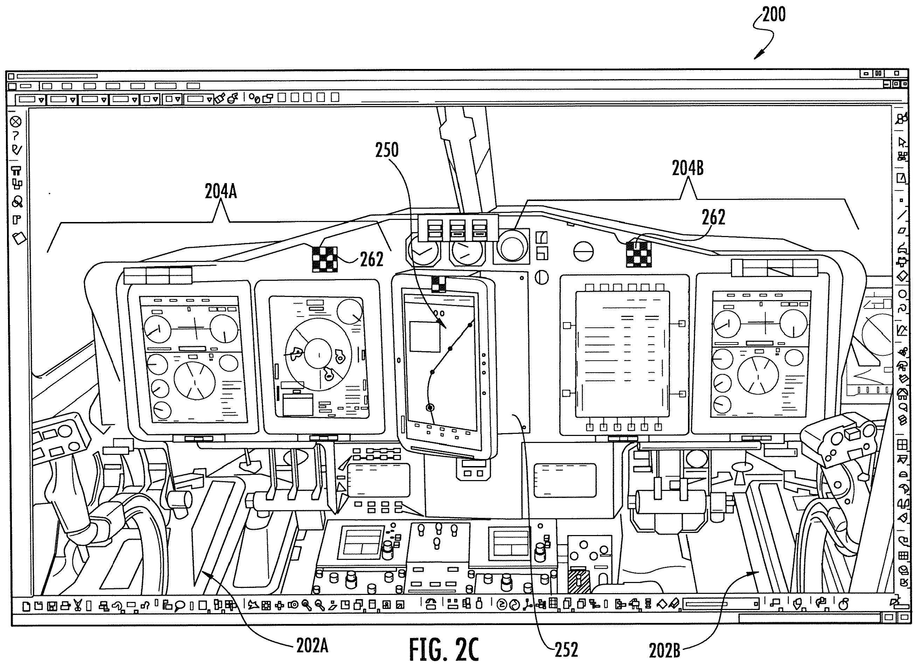

FIG. 2C illustrates a schematic of the cockpit 200 of the vehicle 110 with the adaptable/adjustable user interface 250 positioned and optimized for left pilot operations according to an embodiment. For example, in FIG. 2C, the adaptable/adjustable user interface 250 is positioned toward the first pilot seated in the first pilot space 202A, such that inaccessible controls 204B (functionality) in the second pilot space 202B are replicated (i.e., displayed) with functionality that allows the inaccessible controls 204B to be controllable by the first pilot in the first pilot space 202A. As such, the first pilot in the first pilot space 202A can view and select buttons on the adaptable/adjustable user interface 250 to control one or more controls 204B normally controlled by the second pilot in the second pilot space 202B because the adaptable/adjustable user interface 250 is positioned and angled for left seat pilot operations.

By creating the adaptable/adjustable user interface 250, embodiments are able to tailor the HMI to the user rather than trying to adjust the user/pilot/operator to the cockpit interface. In some embodiments, the adaptable/adjustable user interface 250 can be manually positioned and angled to the left pilot position accessible to the first pilot space 202A, the right pilot position accessible to the second pilot space 202B, and/or the center position accessible to both the left and right pilot positions. Responsive to being angled (manually and/or automatically) toward the first pilot position 202A for access by the seated first pilot, the adaptable/adjustable user interface 250 automatically displays the functionality of controls 204B normally operated by the second pilot. Responsive to being angled (manually and/or automatically) toward the second pilot position 202B for access by the seated second pilot, the adaptable/adjustable user interface 250 automatically displays the functionality of controls 204A normally operated by the first pilot. Additionally, the optimum viewing angle and position of the adaptable/adjustable user interface 250 (e.g., display screen) can be automatically set based on the user's anthropometric profile and position in the cockpit seat according to embodiments. For example, one or more sensors 262 can be positioned around the cockpit 200 to detect the presence and/or absence of the first pilot seated in the first pilot space 202A as well as the presence and/or absence of the second pilot seated in the second pilot space 202B. The sensors 262 can be imaging sensors (e.g., cameras, CCD devices, etc.), motions sensors, pressure sensors (e.g., in the seats), eye tracking sensors (which are imaging sensors), etc., and signals from the sensors 262 are processed by processors 382 executing software 384 in memory 386 of a computer system 302 (as depicted in FIG. 3) to determine which pilot or pilots are present/absent. Based on the sensor data/signals received by the computer system 302, the computer system 302 positions the adaptable/adjustable user interface 250 to the left position when only the first pilot is seated (determined to be present) in the first pilot space 202A, to the right position when only the second pilot is seated (determined to be present) in the second pilot space 202B, or to the center position when both the first and second pilots are seated (determined to be present). FIG. 3 illustrates a schematic block diagram of the computing system 302 replicating the controls 204A and 204B on the adaptable/adjustable user interface 250 according to an embodiment. Using one or more sensors 262, the computer system 302 determines when the first pilot in the first pilot space 202A is present or absent, when the second pilot seated in the second pilot space 202B is present or absent, and when both the first and seconds pilots are present based on the respective first pilot and/or second pilot being seated in the respective cockpit seat via pressure sensor data, motion sensor data, and/or imaging sensor data (which includes eye tracking data). Accordingly, the computer system 302 causes the display/functionality of the applicable inaccessible controls, whether controls 204A and/or 204B to be displayed for operation of the adaptable/adjustable user interface 250 for the first pilot or second pilot. When only one pilot is present in the vehicle 110 (e.g., either the first pilot seated in the first pilot space 202A or the second pilot seated in the second pilot space 202B), the adaptable/adjustable user interface 250 is automatically positioned to the pilot that is present and positioned away from the space of the absent pilot. The computer system 302 is configured to cause a motor 304 to move or angle the adaptable/adjustable user interface 250 to determined position. In some implementations, an adjustable piece 306 can be utilized to angle and position the adaptable/adjustable user interface 250 as discussed herein. The adjustable piece 306 can be attached to the back of the adaptable/adjustable user interface 250. The adjustable piece 306 can be automatically controlled by the motor 304 to angle/position to the left, to angle/position to the right, and/or to angle/position to the center position. The adjustable piece 306 can include an extendable arm that rotates on an axis, such that the adaptable/adjustable user interface 250 is angled toward the left pilot and right pilot and extends closer to the left pilot and right pilot. The adjustable piece 306 can include a mounting assembly with one or more rotatable brackets, swivel arms, mounting plates, screws, etc., where one end of the adjustable piece 306 mounts to the instrument panel of the cockpit 200 while the other end mounts to the adaptable/adjustable user interface 250.

The computing system 302 can be connected to the controls 204A and 204B to replicate functionality of the controls 204A and 204B on the adaptable/adjustable user interface 250, such that the functionality of the controls 204A and 204B can be provided on (displayed) and operated using the adaptable/adjustable user interface 250. Additionally, an autonomous perception system 300 can be connected directly to the vehicle controls 204A and 204B. The autonomous perception system 300 can provide the functionality of the controls 204A and 204B on the adaptable/adjustable user interface 250 as discussed herein. The adaptable/adjustable user interface 250 can include one or more processors 390 executing software 392 stored in memory 394 in order to display and execute the functionality of the controls 204A and 204B on input/output devices 396 as discussed herein. The input/output devices 396 can include a touch-based display screen, physical buttons/knobs, joystick, etc. Further regarding the autonomous perception system 300 is discussed below.

In embodiments, context-based autonomous perception can be provided for the vehicle 110 which can be an autonomous vehicle, such as an autonomous aircraft. Examples include optionally-piloted vehicles (OPVs) and unmanned aerial vehicles (UAVs), and the autonomous perception system 300 can be provided to assist in human-piloted aircraft landing zone selection. Embodiments can also be used in a number of land, water, or air-based autonomy applications, such as vehicle guidance and target recognition. Using the autonomous perception system 300, the vehicle 110 can operate as an autonomous rotary-wing unmanned aerial vehicle (UAV). The autonomous perception system 300 implements context-based autonomous perception according to an embodiment of the invention.

The autonomous perception system 300 includes a processing system 318 having one or more processors and memory to process sensor data acquired from a perception sensor system 320. The perception sensor system 320 may be attached to or incorporated within the airframe 114. The perception sensor system 320 includes one or more three-dimensional imaging sensors 322 and one or more two-dimensional imaging sensors 324. The processing system 318 processes, in one non-limiting embodiment, perception sensor data acquired through the perception sensor system 320 while the vehicle 110 as an autonomous UAV, is airborne. A three-dimensional image processing system 326 interfaces with the three-dimensional imaging sensors 322, while a two-dimensional image processing system 328 interfaces with the two-dimensional imaging sensors 324. The three-dimensional image processing system 326 and the two-dimensional image processing system 328 may be incorporated within the processing system 318 or implemented as one or more separate processing systems that are in communication with the processing system 318 as part of the autonomous perception system 300. The three-dimensional imaging sensors 322 can include but are not limited to one or more of: a LIght Detection and Ranging scanners (LIDAR) scanner, a stereo camera system, a structure light-based 3D/depth sensor, a time-of-flight camera, a LAser Detection and Ranging scanners (LADAR) scanner, and a RAdio Detection And Ranging (RADAR) scanner. The two-dimensional imaging sensors 324 may include one or more of: a video camera, a multi-spectral camera, or the like.

The vehicle 110 (as an autonomous UAV and/or OPV) may include a communication link 430 that is operable to receive data from a remote source, such as a ground station, another vehicle, a satellite, or other wireless transmitter. In one embodiment, the communication link 430 enables the vehicle 110 to receive data that it may not otherwise be capable of directly sensing, such as current weather conditions. Data can be provided on the communication link 430 as requested by the processing system 318 or data can be pushed from a remote source as it becomes available absent a specific request from the processing system 318.

Additionally, the vehicle 110 may include a navigation system 334, such as, for example, an inertial measurement unit (IMU) that may be used to acquire positional data related to a current rotation and acceleration of the vehicle 110 in order to determine a geographic location of the vehicle 110 (operating as an autonomous UAV), including a change in position of the vehicle 110, or a location against a given map. The navigation system 334 can also or alternatively include a global positioning system (GPS) or the like to enhance location awareness of the vehicle 110.

In exemplary embodiments, the processing system 318 of the autonomous perception system 300 uses the perception sensor system 320 to classify potential landing zones and assist in other guidance algorithms. Contextual information captured from metadata of images acquired by the perception sensor system 320, location information determined by the navigation system 334, time of day and season of the year information known by the processing system 318, and/or weather conditions received via the communication link 430 can be used to select and retrieve similar labeled reference images as part of a semantic classification process. Contextual information can alternatively be determined by other methods as further described herein. By using labeled reference images acquired with similar context, the accuracy of terrain classification can be improved, particularly when operating in a wide range of environmental conditions. For example, tree images in the New England area in the winter may be difficult to when using a simple trained model-based classifier using the images acquired in the summer.

FIG. 4 illustrates a schematic block diagram of the system 300 for context-based autonomous perception onboard the vehicle 110 of FIG. 1 according to an embodiment. The system 300 is an embodiment of the autonomous perception system of depicted in FIG. 3. As illustrated, the system 300 includes the processing system 318 as an example of an aircraft computer system that executes instructions for implementing a context-based semantic image labeler 402. The processing system 318 may be coupled to the perception sensor system 320 and receives raw sensor data from the perception sensor system 320. As described in reference to FIG. 3, the perception sensor system 320 can include one or more three-dimensional imaging sensors 322 and one or more two-dimensional imaging sensors 324. As depicted in FIG. 3, the processing system 318 includes a memory 406 that communicates with a processor 404. The memory 406 may store the context-based semantic image labeler 402 as executable instructions that are executed by processor 404. The memory 406 is an example of a non-transitory computer readable storage medium tangibly embodied in the processing system 318 including executable instructions stored therein, for instance, as firmware. Also, in embodiments, memory 406 may include random access memory (RAM), read-only memory (ROM), or other electronic, optical, magnetic or any other computer readable medium onto which instructions and data are stored. The processor 404 may be any type of processor, including a general purpose processor, a graphics processing unit (GPU), a digital signal processor, a microcontroller, an application specific integrated circuit, a field programmable gate array, or the like. Although depicted as singular blocks, the processor 404 and memory 406 can be distributed between multiple processing circuits and memory subsystems. In an embodiment, the processor 404 performs functions of the three-dimensional image processing system 326 (depicted in FIG. 3) and the two-dimensional image processing system 328 (depicted in FIG. 3).

The system 300 includes a database 412. The database 412 may be used to store labeled reference images to support context-based autonomous perception. Image data stored in the database 412 can include two-dimensional and/or three-dimensional reference images with semantic labels applied to identify terrain type and various features as observed under different sets of conditions. Images in the database 412 can be specific to a single entity type, such as a car, truck, tree, etc. Alternatively, individual images in the database 412 can be a scene that includes multiple semantic labels that identify segments in the scene by semantic type, such as a cityscape with roads, buildings, and vehicles. The database 412 may be populated as a ground-based operation on the processing system 318. Alternatively, data can be added to the database 412 via the communication link 430. Labeling of reference image data may be performed as an offline task. As additional perception sensor data are received from the perception sensor system 320, this data may also be stored in the processing system 318 or transmitted on the communication link 430 for analysis, labeling, and subsequent addition to the database 412.

The system 300 may provide one or more controls, such as vehicle controls 408. The vehicle controls 408 may provide directives based on, e.g., data associated with the navigation system 434. Directives provided by the vehicle controls 408 may include navigating or repositioning the vehicle 110 (operating as an autonomous UAV) to an alternate landing zone for evaluation as a suitable landing zone. The directives may be presented on one or more input/output (I/O) devices 410. The I/O devices 410 may include a display device or screen, audio speakers, a graphical user interface (GUI), etc. In some embodiments, the I/O devices 410 may be used to enter or adjust contextual information while the processing system 318 acquires perception sensor data from the perception sensor system 320. The adaptable/adjustable user interface 250 can be or operates as one of the I/O devices 410. The vehicle controls 408 can include the functionality provided by the controls 204A and 204B, such that the vehicle controls 408 provide the functionality on the adaptable/adjustable user interface 250 for use by the crewmember.

It is to be appreciated that the system 300 is illustrative. In some embodiments, additional components or entities not shown in FIG. 4 may be included. In some embodiments, one or more of the components or entities may be optional. In some embodiments, the components or entities of the system 300 may be arranged or configured differently from what is shown in FIG. 4. For example, in some embodiments the I/O device(s) 410 may be commanded by vehicle controls 408, as opposed to being commanded by the processor 404.

The database 412 of FIG. 4 can be indexed based on context information, one or more extracted features from images, or a combination of context information and one or more extracted features from images. As such, the database 412 may be implemented as contextually-indexed database based on contextual information, a feature-indexed database based on features, or a combined contextually- and feature- indexed database. State-of-the-art indexing methods, such as Tree-Based Structure (e.g., KD-Tree), Hashing, or Binary Small Code, are applied to perform large scale and efficient nearest neighbor searches of similar images. Tree-based structure exploits spatial partitions (i.e., KD-tree) and recursive hyper plane decomposition, and provides an efficient means to search low-dimensional vector data exactly. Hashing (e.g., Locality-sensitive hashing) offers sub-linear time search by hashing highly similar examples together. Compact binary code provides a very compact representation with a few hundred bits per image.

One or more embodiments include an apparatus for an aircraft (e.g., vehicle 110). A cockpit 200 is arranged with two or more pilot spaces for operating the aircraft. The cockpit 200 includes first controls 204A arranged in a first fixed position accessible by a first pilot space 202A of the two or more pilot spaces and second controls 204B arranged in a second fixed position accessible by a second pilot space 202B. An adaptable user interface 250 is adjustably coupled to the cockpit 200, and the adaptable user interface 250 is configured to replicate at least a portion of a functionality of the first controls 204A and the second controls 204B (such that a single pilot seated in one pilot space (first or second pilot space 202A or 202B) can fly the aircraft even though respective controls 204A or 204B in another pilot space are inaccessible by the single pilot). The adaptable user interface 250 is configured with adjustable positional arrangements. The adjustable positional arrangements include a first position accessible to the first pilot space and a second position accessible to the second pilot space.

The adjustable positional arrangements further include a center position accessible to both the first and second pilot spaces 202A and 202B. The first position is angled to or toward the first pilot space 202A and away from the second pilot space 202B. The second position is angled to or toward the second pilot space 202B and away from the first pilot space 202A. The functionality of the second controls 204B is replicated on the adaptable user interface 250 in response to the adaptable user interface 250 being in and/or moved (automatically and/manually) to the first position accessible to the first pilot space 202A. The functionality of the first controls 204A is replicated on the adaptable user interface 250 in response to the adaptable user interface 250 being in and/or moved (automatically and/manually) to the second position accessible to the second pilot space 202B. The autonomous perception system 300, computer system 302, and/or adaptable user interface 250 (itself) are configured to determine the functionality which is information that represents the desired controls 204A or 204B, and accordingly, to cause the functionality to be operably presented on the adaptable user interface 250.

In response to tracking eye movement (e.g., by the autonomous perception system 300, computer system 302, and/or adaptable user interface 250 (itself)) of a first pilot in the first pilot space 202A or a second pilot in the second pilot space 202B, the adaptable user interface 250 is moveable (e.g., by the autonomous perception system 300, computer system 302, and/or adaptable user interface 250 (itself)) to follow tracked eye movement in the first or second pilot spaces 202A and 202B.

A motor 304 is attached to the adaptable user interface 250, and the motor 304 operable to automatically move the adaptable user interface 250 to the first position accessible to the first pilot space 202A, the second position accessible to the second pilot space 202B, and/or a center position accessible to both the first and second pilot spaces 202B and 202B. The motor 304 is operable to automatically move the adaptable user interface 250 according to tracked eye movement. In one implementation, a motor may not be used, and the adaptable user interface 250 is a three-dimensional (3D) display. The 3D display is configured for optimum vision by directing the light/pixels according to position (e.g., the first or second pilot spaces 202B and 202B) where the user is located. Therefore, in addition to a motor/mechanical adjustment of the adaptable user interface 250, there can be a non-physical adjustment of the display based on internal components of the display such as pixel adjustment.

One or more embodiments include an optionally-piloted vehicle (OPV) system of an aircraft (e.g., vehicle 110). In some implementations, an autonomous perception (sensor) system 300 can include and/or be integrated with the computer system 302. A processing system 318 is coupled to the perception sensor system 320. The processing system 318 including a processor 404 and memory 406 having instructions stored thereon that, when executed by the processor 404, cause the autonomous perception system 300 to: cause an adaptable user interface 250 to display controls associated with an unoccupied pilot space and direct/control movement of the adaptable user interface 250 to be accessible to an occupied pilot space. The occupied pilot space is a different location from the occupied pilot space. The adaptable user interface 250 is moved (manually and/or automatically) to be accessible to the occupied pilot space based on receiving data from one or more sensors 262.

FIG. 6 depicts a schematic of an example computing system/processing system 600 according to an embodiment. The computing system/processing system 600 can be representative of various types of computer systems on which embodiments can be implemented. Various processors, computers, computing systems, processing systems, electronics, controls, panels, features, sensors, systems, etc., (as well as the adaptable/adjustable user interface 250, computing system 302, system 300, controls 204A, 204B, processing system 318, etc.) can utilize, be implemented in, be integrated with, and/or include any of the elements of computing system/processing system 600, as understood by one skilled in the art. Any feature in computing system/processing system 600 can incorporate and/or implement any aspect of embodiments discussed herein.

Examples of well-known computing systems, environments, and/or configurations that may be suitable for use with computing system/processing system 600 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, mainframe computer systems, and distributed cloud computing environments that include any of the above systems or devices, and the like.

Computing system/processing system 600 may be described in the general context of computer system-executable instructions, such as program modules, being executed by a computer system. Generally, program modules may include routines, programs, objects, components, logic, data structures, and so on that perform particular tasks or implement particular abstract data types. Computing system/processing system 600 may be practiced in distributed cloud computing environments where tasks are performed by remote processing devices that are linked through a communications network. In a distributed cloud computing environment, program modules may be located in both local and remote computer system storage media including memory storage devices.

The components of computing system/processing system 600 may include, but are not limited to, one or more processors or processing units 616, a system memory 628, and a bus 618 that couples various system components including system memory 628 to processor 616. Bus 618 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

Computing system/processing system 600 typically includes a variety of computer system readable media. Such media may be any available media that is accessible by computing system/processing system 600, and it includes both volatile and non-volatile media, removable and non-removable media. The system memory 628 can include computer system readable media in the form of volatile memory, such as random access memory (RAM) 630 and/or cache memory 632. Computing system/processing system 600 may further include other removable/non-removable, volatile/non-volatile computer system storage media. By way of example only, storage system 634 can be provided for reading from and writing to a nonremovable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 618 by one or more data media interfaces. Memory 628 may include at least one program product having a set (e.g., at least one) of program modules that are configured to carry out the functions of embodiments of the invention.

Program/utility 640, having a set (at least one) of program modules 642, may be stored in memory 628 by way of example, and not limitation, as well as an operating system, one or more application programs, other program modules, and program data. Each of the operating system, one or more application programs, other program modules, and program data or some combination thereof, may include an implementation of a networking environment. Program modules 642 generally carry out the functions and/or methodologies of embodiments of the invention as described herein.

Computing system/processing system 600 may also communicate with one or more external devices 614 such as a keyboard, a pointing device, a display 624, etc.; one or more devices that enable a user to interact with computer system/server 612; and/or any devices (e.g., network card, modem, satellite, etc.) that enable computing system/processing system 600 to communicate with one or more other computing devices. Such communication can occur via Input/Output (I/O) interfaces 622. Still yet, computing system/processing system 600 can communicate with one or more networks such as a local area network (LAN), a general wide area network (WAN), and/or a public network (e.g., the Internet) via network adapter 620. As depicted, network adapter 620 communicates with the other components of computing system/processing system 600 via bus 618. It should be understood that although not shown, other hardware and/or software components could be used in conjunction with computing system/processing system 600. Examples, include but are not limited to: microcode, device drivers, redundant processing units, external disk drive arrays, RAID systems, tape drives, and data archival storage systems, etc.

Technical effects and benefits include an adaptable user interface design that optimizes the placement of cockpit display(s) and content for the users in the cockpit. As such, this alleviates the need to duplicate every switch and panel for use when a single pilot operates the vehicle instead of two pilots. Additionally, the adaptable user interface allows a first pilot to operate the aircraft from his/her seat while concurrently operating controls positioned at the seating space designed for a second pilot. Therefore, even when a cockpit arrangement was originally designed with two pilots in mind, the previously inaccessible cockpit displays, controls, and switches are now made accessible to a single crewmember via the adaptable user interface and can be reached by the single crewmember (i.e., pilot) from his/her seat when the other pilot seat is unoccupied, thereby allowing all the cockpit controls to be accessible from either seat via the adaptable user interface.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An apparatus comprising:
a computing system; and
an adaptable user interface configured to be fixable to an aircraft, the adaptable user interface being coupled to the computing system to replicate at least a portion of controls of the aircraft, the adaptable user interface being configured with adjustable positional arrangements;
wherein the adjustable positional arrangements comprise a first position associated with replicating a first functionality of the controls and a second position associated with replicating a second functionality of the controls.

2. The apparatus of claim 1, wherein the adjustable positional arrangements further comprise a center position associated with replicating the first functionality and the second functionality of the controls.

3. The apparatus of claim 1 or 2, wherein the first position is associated with a first predefined direction, particularly wherein the second position is associated with a second predefined direction different from the first predefined direction.

4. The apparatus of one of claims 1-3, wherein the adaptable user interface is configured to display the first functionality of the controls in response to being moved to the first position and/or to display the second functionality of the controls in response to being moved to the second position.

5. The apparatus of one of claims 1-4, wherein the adaptable user interface is configured to be moveable to one of the adjustable positional arrangements in response to tracked eye movement being associated with the one of the adjustable positional arrangements.

6. The apparatus of one of claims 1-5, wherein a motor is attached to the adaptable user interface, the motor being operable to automatically move the adaptable user interface to the first position, the second position, or a center position.

7. The apparatus of claim 6, wherein the motor is operable to automatically move the adaptable user interface according to tracked eye movement.

8. A method of providing an assembly for an aircraft, the method comprising:
providing a computing system; and
coupling an adaptable user interface to the computing system to replicate at least a portion of controls of the aircraft, the adaptable user interface being configured to be fixable to the aircraft, the adaptable user interface being configured with adjustable positional arrangements;
wherein the adjustable positional arrangements comprise a first position associated with replicating a first functionality of the controls and a second position associated with replicating a second functionality of the controls.

9. The method of claim 8, wherein the adjustable positional arrangements further comprise a center position associated with replicating the first functionality and the second functionality of the controls.

10. The method of claim 8 or 9, wherein the first position is associated with a first predefined direction, particularly wherein the second position is associated with a second predefined direction different from the first predefined direction.

11. The method of one of claims 8-10, wherein the adaptable user interface is configured to display the first functionality of the controls in response to being moved to the first position and/or to display the second functionality of the controls in response to being moved to the second position.

12. The method of one of claims 8-11, wherein the adaptable user interface is configured to be moveable to one of the adjustable positional arrangements in response to tracked eye movement being associated with the one of the adjustable positional arrangements.

13. The method of one of claims 8-12, wherein a motor is attached to the adaptable user interface, the motor being operable to automatically move the adaptable user interface to the first position, the second position, or a center position, particularly wherein the motor is operable to automatically move the adaptable user interface according to tracked eye movement.

14. An optionally-piloted vehicle system for an aircraft, the optionally-piloted vehicle system comprising:
an autonomous system; and
a processing system coupled to the autonomous system, the processing system comprising a processor and memory having instructions stored thereon that, when executed by the processor, cause the autonomous system to:
cause an adaptable user interface to display controls of the aircraft according to a selected one of adjustable positional arrangements, the adaptable user interface being moveable to the adjustable positional arrangements; and
control movement of the adaptable user interface to the selected one of the adjustable positional arrangements.

15. The optionally-piloted vehicle system of claim 14, wherein the adaptable user interface is configured to be moved to the selected one of the adjustable positional arrangements based on receiving data from one or more sensors.
